(19) Europäisches Patentamt
European Patent Office
Office européen des brevets

(11) **EP 3 128 145 B1**

(12) **EUROPÄISCHE PATENTSCHRIFT**

(45) Veröffentlichungstag und Bekanntmachung des Hinweises auf die Patenterteilung:
**24.01.2018 Patentblatt 2018/04**

(21) Anmeldenummer: **16179103.3**

(22) Anmeldetag: **12.07.2016**

(51) Int Cl.:
*F01N 13/18* (2010.01)     *F01N 13/08* (2010.01)
*B60K 13/04* (2006.01)     *B23K 31/02* (2006.01)

(54) **JUSTIERBARE HALTERUNG FÜR EINE ABGASANLAGE UND VERFAHREN ZUR BEFESTIGUNG EINER HALTERUNG FÜR EINE ABGASANLAGE**

ADJUSTABLE MOUNT FOR AN EXHAUST SYSTEM AND METHOD FOR INSTALLING A MOUNT FOR AN EXHAUST SYSTEM

FIXATION AJUSTABLE POUR UN SYSTÈME D'ÉCHAPPEMENT ET PROCÉDÉ DE FIXATION POUR UN SYSTÈME D'ÉCHAPPEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.08.2015 DE 102015113059**

(43) Veröffentlichungstag der Anmeldung:
**08.02.2017 Patentblatt 2017/06**

(73) Patentinhaber: **Eberspächer Exhaust Technology GmbH & Co. KG**
**66539 Neunkirchen (DE)**

(72) Erfinder:
• **Wagner, Andreas**
**73728 Esslingen (DE)**
• **David, Steffen**
**73614 Schorndorf (DE)**
• **Puchta, Christoph**
**66287 Quierschied (DE)**
• **Grün, Benjamin**
**66773 Schwalbach (DE)**
• **Glage, Dominik**
**66851 Hauptstuhl (DE)**

(74) Vertreter: **Diehl & Partner GbR**
**Patentanwälte**
**Erika-Mann-Strasse 9**
**80636 München (DE)**

(56) Entgegenhaltungen:
JP-A- H07 279 656     JP-A- H11 342 753
JP-U- H0 447 127     JP-U- S57 198 316
US-A- 5 673 877

**Beschreibung**

Die vorliegende Erfindung betrifft eine justierbare Halterung für eine Abgasanlage und ein Verfahren zur Befestigung einer Halterung für eine Abgasanlage.

Eine Abgasanlage (auch unter der Bezeichnung Auspuffanlage bekannt) besteht aus den Komponenten Abgasleitungen und Abgastöpfen (auch unter der Bezeichnung Auspufftöpfen bekannt). Die Abgasleitungen umfassen beispielsweise Krümmer, Hosenrohr, Zwischenstück und Endrohr, welche jeweils auch mehrfach vorhanden sein können. Die Abgastöpfe umfassen beispielsweise Schalldämpfer und Katalysatoren, welche jeweils auch mehrfach vorhanden sein können.

Abgasanlagen werden in der Regel am Unterboden von Fahrzeugen befestigt. Dabei muss die Befestigung so erfolgen, dass einerseits eine Änderung der Länge der Abgasanlagen infolge einer Temperaturausdehnung bei unterschiedlichen Temperaturen kompensiert werden kann. Andererseits muss die Befestigung so erfolgen, dass die Abgasanlage auch bei Vibrationen und Stößen des Fahrzeugs in Bezug auf den Unterboden des Fahrzeugs weitgehend ortsfest bleibt.

Traditionell werden Abgasanlagen dadurch am Unterboden von Fahrzeugen befestigt, dass am Unterboden des Fahrzeugs mehrere Aufhängungspunkte angebracht sind, welche O-Ringe halten. An der Abgasanlage sind entsprechende Aufhängungspunkte angebracht und in die O-Ringe eingeführt. Es ist ersichtlich, dass diese Art der Befestigung der Abgasanlage am Unterboden von Fahrzeugen ein erhebliches Spiel für Relativbewegungen zwischen Abgasanlage und Fahrzeug lässt. Traditionell sind die Aufhängungspunkte als einfache Haken ausgebildet.

Moderne Fahrzeuge weisen häufig Blenden auf, durch welche das wenigstens eine Endrohr der Abgasanlage geführt wird. In der Folge ist das bei der Verwendung von in Haken eingehängten O-Ringen vorhandene Spiel bei modernen Fahrzeugen häufig nicht mehr tolerabel.

Es ist daher bekannt, anstelle einfacher O-Ringe Auspuffgummis zu verwenden, die aus einem massiven Grundkörper bestehen, in welchen zwei oder mehr voneinander beabstandete Öffnungen eingebracht sind. Dabei durchdringen die Öffnungen den Grundkörper in der Regel so, dass Lochnormalen (Normale auf die Ebene, in welcher ein von einer Öffnung festgelegtes Loch liegt) der Öffnungen parallel sind. Derartige Auspuffgummis sind häufig aus Kautschuk, Silikon oder Fluorelastomeren gebildet. Der Grundkörper der Auspuffgummis weist häufig eine ovale, rautenförmige, rechteckige oder auch kleeblattförmige Kontur und eine (mit Ausnahme der Öffnungen und Verrundungen der Kanten) konstante Materialstärke auf.

Bei der Verwendung von Auspuffgummis sind die Aufhängungspunkte häufig als Befestigungsdorne mit Widerhaken ausgebildet, wobei an dem Unterboden des Fahrzeugs und an der Abgasanlage angeordnete Befestigungsdorne paarweise unterschiedliche Öffnungen desselben Auspuffgummis durchdringen. Die Öffnungen der Auspuffgummis sind häufig rund, oval oder bogenförmig ausgebildet.

Mit der Abnahme des zulässigen Spiels zwischen Abgasanlage und Unterboden des Fahrzeugs gewinnt die präzise Anordnung und Ausrichtung der Aufhängungspunkte am Unterboden des Fahrzeugs und Komponenten der Abgasanlage an Bedeutung.

Die amerikanische Patentschrift US 5,673,877 A offenbart eine Halterung für eine Abgasleitung mit den Merkmalen des Oberbegriffs des unabhängigen Anspruchs 1.

Es ist Aufgabe der vorliegenden Erfindung, eine Halterung (und damit einen Aufhängungspunkt) für eine Abgasanlage bereitzustellen, welche mit geringem Aufwand sicher an einer Komponente der Abgasanlage oder dem Unterboden eines Fahrzeugs befestigt werden kann, und auf einfache Weise eine Justierung ihrer Anordnung und Orientierung erlaubt. Weiter soll die Halterung kostengünstig herstellbar und universell einsetzbar sein.

Die vorstehende Aufgabe wird durch die Kombination der Merkmale der unabhängigen Ansprüche gelöst. Bevorzugte Weiterbildungen finden sich in den Unteransprüchen.

Ausführungsformen einer Halterung für eine Abgasanlage weisen einen Träger und einen von dem Träger getragenen Befestigungsdorn auf. Der Träger weist eine erste Platte und eine von der ersten Platte beabstandete zweite Platte auf. Dabei wird unter einer Platte ein flächiger, ebener Festkörper verstanden, dessen Stärke (Dicke) höchstens 30 % oder höchstens 20 % oder höchstens 10 % der übrigen Dimensionen des Festkörpers (Länge und Breite) entspricht. Beispielsweise kann es sich bei den ersten und zweiten Platten jeweils um ein Feinblech mit einer Stärke zwischen 0,2 mm und 3 mm oder 0,5 mm und 3 mm oder um ein Grobblech mit einer Stärke von größer 3 mm und kleiner 5 mm handeln. Die erste Platte und die zweite Platte weisen jeweils einen Befestigungsabschnitt für eine Befestigung des Trägers an einer Komponente der Abgasanlage oder an einem Unterboden eines Fahrzeugs auf. Dieser Befestigungsabschnitt kann beispielsweise einstückig durch Biegen an der jeweiligen Platte ausgebildet sein. Über die Befestigungsabschnitte kann der Träger dauerhaft an einer Komponente der Abgasanlage (wie beispielsweise einer Abgasleitung oder einem Abgastopf) oder einem Unterboden eines Fahrzeugs befestigt werden. Diese dauerhafte Befestigung des Trägers an der Komponente der Abgasanlage bzw. dem Unterboden des Fahrzeugs kann beispielsweise durch Verschweißen der Befestigungsabschnitte der ersten und zweiten Platten des Trägers mit der Komponente der Abgasanlage bzw. dem Unterboden des Fahrzeugs erfolgen. Die erste Platte und die zweite Platte weisen jeweils eine Öffnung auf.

Diese Öffnungen können einen identischen oder unterschiedlichen Querschnitt aufweisen. Der Befestigungsdorn weist entlang der Richtung seiner größten Erstreckung einen ersten Abschnitt auf, der ausgebildet ist, einen Auspuffgummi zu durchsetzen. Weiter weist der Befestigungsdorn einen vom ersten Abschnitt unterschiedlichen zweiten Abschnitt auf, in welchem er die Öffnungen in den ersten und zweiten Platten des Trägers durchdringt. Der zweite Abschnitt des Befestigungsdorns kann beispielsweise unmittelbar an den ersten Abschnitt des Befestigungsdorns angrenzen. Dabei weisen die Öffnungen in den ersten und zweiten Platten des Trägers einen Durchmesser auf, der wenigstens 10 % größer ist als ein Durchmesser des Befestigungsdorns in dem Bereich, in welchem er die jeweilige Öffnung durchdringt. Alternativ weisen die Öffnungen in den ersten und zweiten Platten des Trägers einen Durchmesser auf, der wenigstens 20 % größer ist als ein Durchmesser des Befestigungsdorns in dem Bereich, in welchem er die jeweilige Öffnung durchdringt. Weiter alternativ weisen die Öffnungen in den ersten und zweiten Platten des Trägers einen Durchmesser auf, der wenigstens 30 % größer ist als ein Durchmesser des Befestigungsdorns in dem Bereich, in welchem er die jeweilige Öffnung durchdringt.

Da zwischen dem Befestigungsdorn und den Öffnungen in den Platten des Trägers ein erhebliches Spiel besteht, ist es auch nach der Befestigung der Platten des Trägers an einer Komponente einer Abgasanlage bzw. dem Unterboden eines Fahrzeugs möglich, den ersten Abschnitt des Befestigungsdorns exakt auszurichten. Dies basiert auf der Überlegung, dass zunächst nur der Träger dauerhaft an der mit Herstellungstoleranzen behafteten Komponente der Abgasanlage bzw. dem mit Herstellungstoleranzen behafteten Unterboden des Fahrzeugs befestigt wird, und der Befestigungsdorn zunächst lose in den Träger eingelegt wird. Die exakte Ausrichtung des Befestigungsdorns erfolgt dann nach Befestigung der Platten des Trägers an der Komponente der Abgasanlage bzw. dem Unterboden des Fahrzeugs. Auf diese Weise können Herstellungstoleranzen leicht ausgeglichen werden.

Erfindungsgemäß weist der Befestigungsdorn im zweiten Abschnitt zwei voneinander beabstandete Metallscheiben auf. Jede dieser Metallscheiben umgibt den Befestigungsdorn in Umfangsrichtung vollständig. Dabei sind die Metallscheiben gemäß einer Ausführungsform so am Befestigungsdorn angeordnet, dass die beiden ersten und zweiten Platten des Trägers zwischen den beiden Metallscheiben angeordnet sind. Dabei sind die Metallscheiben gemäß einer weiteren Ausführungsform so am Befestigungsdorn angeordnet, dass jeweils eine der beiden ersten und zweiten Platten des Trägers unmittelbar benachbart zu einer der beiden Metallscheiben angeordnet ist.

Die Metallscheiben erleichtern eine sichere Befestigung des Befestigungsdorns an den Platten des Trägers, da die Befestigung des Befestigungsdorns an den Platten des Trägers mittelbar über die Metallscheiben erfolgen kann. Da die Metallscheiben den Befestigungsdorn in Umfangsrichtung umgeben, weisen sie einen größeren Durchmesser als der Befestigungsdorn auf. Beispielsweise können die Metallscheiben einen Durchmesser aufweisen, der größer als der Durchmesser der Öffnungen in den ersten und zweiten Platten des Trägers ist.

Die Befestigungsabschnitte der ersten und zweiten Platte des Trägers können gleich oder verschieden ausgebildet sein. Weiter können die Befestigungsabschnitte durch Falze oder Nuten von anderen Bereichen der Platten getrennt sein; dies ist jedoch nicht erforderlich.

Gemäß einer Ausführungsform weisen die Öffnungen in den ersten und zweiten Platten des Trägers einen Durchmesser auf, der höchstens 150 % größer ist als ein Durchmesser des Befestigungsdorns in dem Bereich, in welchem er die jeweilige Öffnung durchdringt. Gemäß einer alternativen Ausführungsform weisen die Öffnungen in den ersten und zweiten Platten des Trägers einen Durchmesser auf, der höchstens 90 % größer ist als ein Durchmesser des Befestigungsdorns in dem Bereich, in welchem er die jeweilige Öffnung durchdringt. Gemäß einer alternativen Ausführungsform weisen die Öffnungen in den ersten und zweiten Platten des Trägers einen Durchmesser auf, der höchstens 80 % größer ist als ein Durchmesser des Befestigungsdorns in dem Bereich, in welchem er die jeweilige Öffnung durchdringt. Auf diese Weise ist sichergestellt, dass trotz des Spiels eine sichere Befestigung des in den Öffnungen der Platten des Trägers aufgenommenen Befestigungsdorns an den Platten des Trägers möglich ist.

Dabei sind beispielsweise folgende Abhängigkeiten des Durchmessers der Öffnungen in den ersten und zweiten Platten des Trägers (in der folgenden Übersicht als "DO" bezeichnet) vom Durchmesser des Befestigungsdorns in dem Bereich, in welchem er die jeweilige Öffnung durchdringt (in der folgenden Übersicht als "DD" bezeichnet), möglich:

$$DD + 10\ \%\ DD \leq DO \leq DD + 150\ \%\ DD, \qquad DD + 10\ \%\ DD \leq DO \leq DD + 90\ \%\ DD,$$

$$DD + 10\ \%\ DD \leq DO \leq DD + 80\ \%\ DD, \quad DD + 20\ \%\ DD \leq DO \leq DD + 150\ \%\ DD,$$

$$DD + 20\ \%\ DD \leq DO \leq DD + 90\ \%\ DD, \quad DD + 20\ \%\ DD \leq DO \leq DD + 80\ \%\ DD,$$

$$DD + 30\ \%\ DD \le DO \le DD + 150\ \%\ DD, \qquad DD + 30\ \%\ DD \le DO \le DD + 90\ \%\ DD,$$

$$DD + 30\ \%\ DD \le DO \le DD + 80\ \%\ DD$$

Gemäß einer Ausführungsform ist der Befestigungsdorn im Bereich der Öffnungen in den ersten und zweiten Platten des Trägers mit den ersten und zweiten Platten des Trägers verschweißt. Diese Verschweißung erfolgt erst nach Befestigung der Platten des Trägers an einer Komponente einer Abgasanlage bzw. einem Unterboden eines Fahrzeugs und nach einer Ausrichtung des ersten Abschnitts des Befestigungsdorns. Durch das Verschweißen kann der Befestigungsdorn dauerhaft in der in Bezug auf die Komponente der Abgasanlage bzw. den Unterboden des Fahrzeugs richtig justierten Position gehalten werden.

Die Metallscheibe, die näher am ersten Abschnitt des Befestigungsdorns angeordnet ist, als die andere Metallscheibe, kann einstückig mit dem Befestigungsdorn ausgebildet sein. Auf diese Weise wird die Anzahl der verwendeten Teile gering gehalten, da zusätzlich zum Träger und dem Befestigungsdorn nur eine einzige zusätzliche Metallscheibe benötigt wird.

Ist eine Metallscheibe nicht einstückig mit dem Befestigungsdorn ausgebildet, so kann die Metallscheibe einen Durchbruch aufweisen, welcher vom Befestigungsdorn durchsetzt wird. Ein Durchmesser des Durchbruchs in der Metallscheibe kann beispielsweise geringfügig größer als der Durchmesser des Befestigungsdorns im zweiten Abschnitt sein. Dann kann die Metallscheibe lose mit Spiel über den Befestigungsdorn gelegt werden. Gemäß einer Ausführungsform ist der Durchmesser des Durchbruchs in der Metallscheibe so ausgebildet, dass er zwischen 0,1 % und 5 % oder zwischen 0,5 % und 2 % größer als der Durchmesser des Befestigungsdorns im zweiten Abschnitt ist.

Alternativ kann die den Durchbruch aufweisende Metallscheibe durch Kraftschluss mit dem Befestigungsdorn verbunden sein; beispielsweise kann es sich bei der die den Durchbruch aufweisenden Metallscheibe somit um eine Klemmscheibe handeln.

Weiter kann die den Durchbruch aufweisende Metallscheibe durch Verschweißen mit dem Befestigungsdorn verbunden sein, sobald der Befestigungsdorn durch den Durchbruch hindurchgeführt wurde.

Alternativ kann die den Durchbruch aufweisende Metallscheibe durch Verlöten mit dem Befestigungsdorn verbunden sein, sobald der Befestigungsdorn durch den Durchbruch hindurchgeführt wurde.

Weiter alternativ kann die den Durchbruch aufweisende Metallscheibe durch Verkleben mit dem Befestigungsdorn verbunden sein, sobald der Befestigungsdorn durch den Durchbruch hindurchgeführt wurde.

Gemäß einer Ausführungsform ist jede der Metallscheiben mit der ihr nächstbenachbarten ersten oder zweiten Platte des Trägers verschweißt. Diese Verschweißung erfolgt erst nach Befestigung der Platten des Trägers an einer Komponente einer Abgasanlage bzw. einem Unterboden eines Fahrzeugs, nach Einfädeln des Befestigungsdorns durch die Öffnungen der Platten und nach einer Ausrichtung des ersten Abschnitts des Befestigungsdorns.

Gemäß einer Ausführungsform sind Lochnormalen der Öffnungen in den ersten und zweiten Platten des Trägers voneinander beabstandet. Beispielsweise können Lochnormalen der Öffnungen in den ersten und zweiten Platten des Trägers parallel zueinander beabstandet sein, oder windschief zueinander sein, oder sich unter Einschluss eines Winkels schneiden. Dabei kann sich der Befestigungsdorn im ersten Abschnitt geradlinig und im zweiten Abschnitt S-förmig erstrecken. Die Krümmung der S-förmigen Ausbildung des Befestigungsdorns kann beispielsweise vollständig zwischen den Platten des Trägers angeordnet sein. Die S-förmige Ausbildung des Befestigungsdorns erleichtert trotz des großen Spiels zwischen Befestigungsdorn und den Platten des Trägers eine sichere Ausrichtung und Befestigung des Befestigungsdorns an den Platten des Trägers.

Gemäß einer Ausführungsform sind die ersten und zweiten Platten des Trägers zueinander parallel. Gemäß einer alternativen Ausführungsform liegen die ersten und zweiten Platten des Trägers in Ebenen, die miteinander einen Winkel von weniger als 20° oder einen Winkel von weniger als 10° oder einen Winkel von weniger als 5° einschließen. Auf diese Weise ist sichergestellt, dass Lochnormalen der Öffnungen in den ersten und zweiten Platten des Trägers in die im Wesentlichen gleiche Richtung orientiert sind.

Gemäß einer Ausführungsform weisen der Befestigungsdorn und die Öffnungen in den ersten und zweiten Platten des Trägers einen kreisförmigen Querschnitt auf. Gemäß einer alternativen Ausführungsform weisen der Befestigungsdorn und die Öffnungen in den ersten und zweiten Platten des Trägers einen ovalen Querschnitt auf. Gemäß einer weiteren alternativen Ausführungsform weisen der Befestigungsdorn und die Öffnungen in den ersten und zweiten Platten des Trägers einen dreieckigen Querschnitt auf. Gemäß einer weiteren alternativen Ausführungsform weisen der Befestigungsdorn und die Öffnungen in den ersten und zweiten Platten des Trägers einen viereckigen Querschnitt auf. Gemäß einer weiteren alternativen Ausführungsform weisen der Befestigungsdorn und die Öffnungen in den ersten und zweiten Platten des Trägers einen mehreckigen Querschnitt auf. Somit kann die Form des Querschnitts des Befestigungsdorns der Form des Querschnitts der Öffnungen in den ersten und zweiten Platten des Trägers entsprechen. Bei Verwendung eines nicht kreisförmigen Querschnitts kann eine extreme Verdrehung des Befestigungsdorns gegenüber den Platten unterbunden werden, sofern ein größter Durchmesser des Befestigungsdorns kleiner als ein kleinster Durchmesser der Öffnung in den ersten und zweiten Platten des Trägers ist.

Gemäß einer Ausführungsform weist der Befestigungsdorn im ersten Abschnitt zwei voneinander beabstandete Vorsprünge auf. Dabei weist der Vorsprung, der weiter von dem zweiten Abschnitt des Befestigungsdorns beabstandet ist, als der andere Vorsprung, auf der dem zweiten Abschnitt des Befestigungsdorns abgewandten Seite des Vorsprungs eine Rampe auf. Diese Rampe erleichtert ein Einfädeln des Dorns in eine Öffnung eines Auspuffgummis und erlaubt es gleichzeitig, ein Herausrutschen des Befestigungsdorns aus der Öffnung des Auspuffgummis zu unterbinden.

Gemäß einer Ausführungsform ist der Abstand zwischen den ersten und zweiten Platten des Trägers größer als 30 mm oder größer als 60 mm oder größer als 90 mm. Gemäß einer Ausführungsform ist der Abstand zwischen den ersten und zweiten Platten des Trägers kleiner als 200 mm oder kleiner als 150 mm oder kleiner als 100 mm. Dabei sind beispielsweise folgende Dimensionierungen des Abstandes (in der folgenden Übersicht als "AB" bezeichnet) möglich:

$$30 \text{ mm} < AB < 200 \text{ mm}, \quad 30 \text{ mm} < AB < 150 \text{ mm}, \quad 30 \text{ mm} < AB < 100 \text{ mm},$$

$$60 \text{ mm} < AB < 200 \text{ mm}, \quad 60 \text{ mm} < AB < 150 \text{ mm}, \quad 60 \text{ mm} < AB < 100 \text{ mm},$$

$$90 \text{ mm} < AB < 200 \text{ mm}, \quad 90 \text{ mm} < AB < 150 \text{ mm}, \quad 90 \text{ mm} < AB < 100 \text{ mm}$$

Gemäß einer Ausführungsform ist der Träger einstückig aus einem Blechmaterial gebildet und sind die ersten und zweiten Platten des Trägers durch einen Verbindungsabschnitt verbunden. Dann kann der Träger beispielsweise durch Tiefziehen oder Biegen eines einzelnen Blechteils gefertigt werden. Durch die einstückige Ausbildung des Trägers wird die Anzahl der verwendeten Teile weiter reduziert.

Gemäß einer Ausführungsform ist der Befestigungsabschnitt der ersten Platte des Trägers, welche erste Platte näher an dem ersten Abschnitt des Befestigungsdorns angeordnet ist, als die zweite Platte des Trägers, parallel zu dieser ersten Platte ausgerichtet. Dabei kann dieser Befestigungsabschnitt beispielsweise S-förmig angebunden sein. Weiter schließt der Befestigungsabschnitt der zweiten Platte des Trägers, welche zweite Platte von dem ersten Abschnitt des Befestigungsdorns weiter beabstandet angeordnet ist, als die erste Platte des Trägers, mit dieser zweiten Platte einen Winkel größer 60° oder einen Winkel größer 80° oder einen Winkel gleich 90° ein. Somit sind die Befestigungsabschnitte der ersten und zweiten Platte des Trägers unterschiedlich orientiert. Auf diese Weise kann beispielsweise der Befestigungsabschnitt der ersten Platte des Trägers an einer Stirnfläche eines Abgastopfes und der Befestigungsabschnitt der zweiten Platte des Trägers an einer Mantelfläche desselben Abgastopfes befestigt werden. Hierdurch kann der Abgastopf sicher gehalten werden.

Gemäß einer Ausführungsform ist der Befestigungsabschnitt der ersten Platte des Trägers, welche erste Platte näher an dem ersten Abschnitt des Befestigungsdorns angeordnet ist, als die zweite Platte des Trägers, wenigstens doppelt so weit von der Öffnung in der ersten Platte beabstandet, wie der Befestigungsabschnitt der zweiten Platte des Trägers von der Öffnung in der zweiten Platte. Bei einer solchen unterschiedlichen Dimensionierung ist der Träger gut geeignet, auch Drehmomente aufzunehmen.

Gemäß einer Ausführungsform sind der Träger und der Befestigungsdorn aus Metall oder aus Edelstahl gebildet. Auch die Metallscheiben können aus Edelstahl gebildet sein.

Gemäß einer Ausführungsform sind die ersten und zweiten Platten identisch ausgebildet. Gemäß einer alternativen Ausführungsform unterscheiden sich die ersten und zweiten Platten voneinander nur in der Lage der Öffnung.

Ausführungsformen eines Verfahrens zu Befestigung einer Halterung für eine Abgasanlage weisen die folgenden Schritte auf: Verschweißen eines ersten Befestigungsabschnitts einer ersten Platte eines Trägers an einer Komponente der Abgasanlage oder einem Unterboden eines Fahrzeugs. Verschweißen eines zweiten Befestigungsabschnitts einer zweiten Platte des Trägers an der Komponente der Abgasanlage oder dem Unterboden des Fahrzeugs so, dass die beiden ersten und zweiten Platten voneinander beabstandet sind, und dass die beiden ersten und zweiten Platten zueinander parallel sind oder in Ebenen liegen, die miteinander einen Winkel von weniger als 20° einschließen. Anordnen eines zweiten Abschnitts eines Befestigungsdorns, der eine erste Metallscheibe trägt, in Öffnungen, die in die Platten des Trägers eingebracht sind so, dass die erste Metallscheibe außerhalb der beiden Platten des Trägers angeordnet ist, wobei der Befestigungsdorn einen ersten Abschnitt aufweist, der ausgebildet ist, einen Auspuffgummi zu durchsetzen, und wobei die Öffnungen in den Platten des Trägers einen Durchmesser aufweisen, der wenigstens 10 % größer ist als ein Durchmesser des Befestigungsdorns in dem Bereich, in welchem er die jeweilige Öffnung durchdringt. Anordnen einer zweiten Metallscheibe mit einem zentralen Durchgang an dem Befestigungsdorn so, dass die beiden Platten des Trägers zwischen der ersten und zweiten Metallscheibe angeordnet sind, wobei jeweils eine der Metallscheiben an einer zugehörigen Platte des Trägers anliegt. Ausrichten des ersten Abschnitts des Befestigungsdorns in Bezug auf die Komponente der Abgasanlage oder den Unterboden des Fahrzeugs. Und Verschweißen der Metallscheiben mit den zugehörigen Platten und dem Befestigungsdorn.

In diesem Zusammenhang wird darauf hingewiesen, dass die in dieser Beschreibung und den Ansprüchen zur Aufzählung von Merkmalen verwendeten Begriffe "umfassen", "aufweisen", "beinhalten", "enthalten" und "mit", sowie deren grammatikalische Abwandlungen, generell als nichtabschließende Aufzählung von Merkmalen, wie z. B. Verfahrensschritten, Einrichtungen, Bereichen, Größen und dergleichen aufzufassen sind, und in keiner Weise das Vorhandensein anderer oder zusätzlicher Merkmale oder Gruppierungen von anderen oder zusätzlichen Merkmalen ausschließen.

Weitere Merkmale der Erfindung ergeben sich aus der nachfolgenden Beschreibung von Ausführungsbeispielen in Verbindung mit den Ansprüchen sowie den Figuren. In den Figuren werden gleiche bzw. ähnliche Elemente mit gleichen bzw. ähnlichen Bezugszeichen bezeichnet. Es wird darauf hingewiesen, dass die Erfindung nicht auf die Ausführungsformen der beschriebenen Ausführungsbeispiele beschränkt, sondern durch den Umfang der beiliegenden Patentansprüche bestimmt ist. Insbesondere können die einzelnen Merkmale bei erfindungsgemäßen Ausführungsformen in anderer Anzahl und Kombination als bei den untenstehend angeführten Beispielen verwirklicht sein. Bei der nachfolgenden Erläuterung eines Ausführungsbeispiels der Erfindung wird auf die beiliegenden Figuren Bezug genommen, von denen

Figur 1A    schematisch eine perspektivische Ansicht einer an einem Auspufftop montierten Halterung gemäß einer ersten Ausführungsform zeigt;

Figur 1B    schematisch die Halterung aus Figur 1A vor einer Montage an dem Auspufftopf zeigt, wobei gestrichelt gezeichnete Komponenten durchsichtig dargestellt sind;

Figur 1C    schematisch die Halterung aus Figur 1A während einer Montage an dem Auspufftopf zeigt;

Figur 1D    schematisch einen Querschnitt durch die Halterung aus Figur 1B zeigt, wobei zusätzlich ein Auspuffgummi dargestellt ist;

Figur 2A    schematisch eine perspektivische Ansicht einer Halterung gemäß einer zweiten Ausführungsform zeigt, wobei gestrichelt gezeichnete Komponenten durchsichtig dargestellt sind;

Figur 2B    einen Träger der Halterung aus Figur 2A in einem in eine Ebene entfalteten Zustand zeigt;

Figur 3A    schematisch eine perspektivische Ansicht einer Halterung gemäß einer dritten Ausführungsform zeigt;

Figur 3B    schematisch eine Seitenansicht der Halterung aus Figur 3A zeigt; und

Figur 3C    schematisch eine weitere Seitenansicht der Halterung aus Figur 3A zeigt.

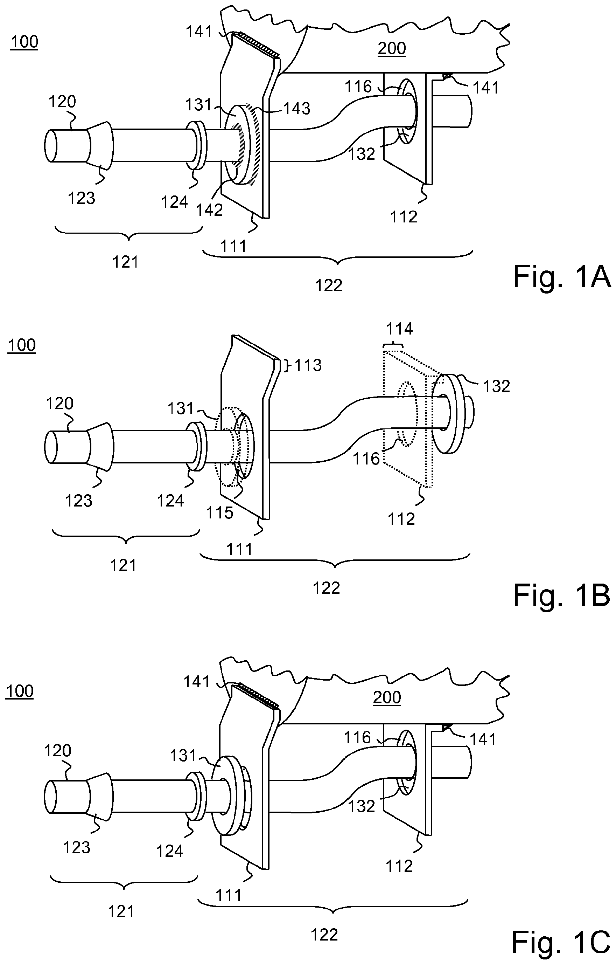

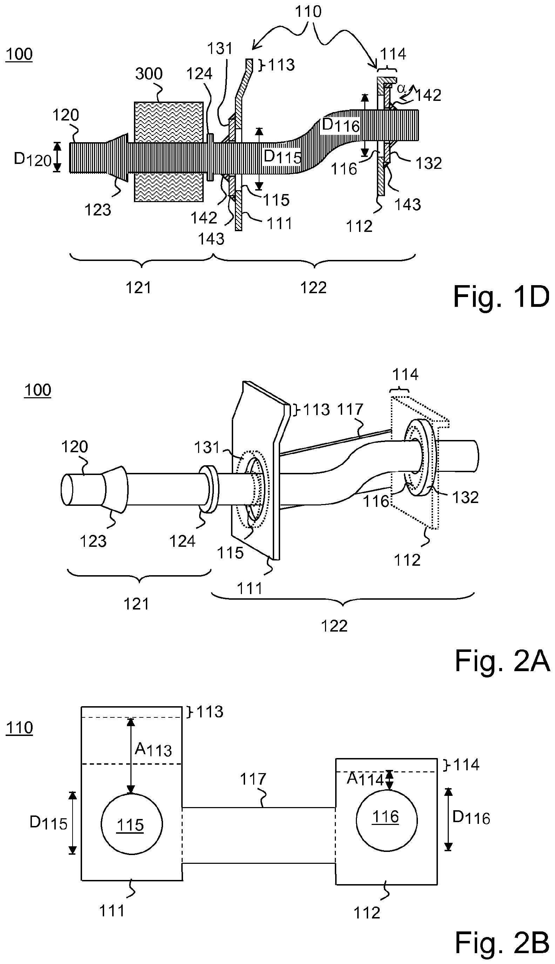

Im Folgenden wird unter Bezugnahme auf die Figuren 1A bis 1D eine erste Ausführungsform einer justierbarer Halterung für eine Abgasanlage beschrieben. Dabei zeigt Figur 1A die Halterung in einem fertig montierten Zustand, die Figur 1B Komponenten der Halterung in einem unmontierten Zustand, die Figur 1C die Halterung in einem Zustand, in welchem lediglich erste und zweite Platten an einer Komponente einer Abgasanlage befestigt sind und Figur 1D einen Querschnitt durch eine montierte Halterung entsprechend Figur 1A, wobei jedoch die Komponente der Abgasanlage nicht gezeigt ist und zusätzlich ein Querschnitt durch einen Abgasgummi gezeigt ist. In den Figuren sind Komponenten, die transparent dargestellt sind, in gepunkteten Linien gezeigt.

Wie besonders gut aus den Figuren 1B und 1D ersichtlich, weist die Halterung 100 einen Befestigungsdorn 120 mit kreisförmigem Querschnitt auf. In der gezeigten Ausführungsform ist der Befestigungsdorn 120 aus massivem Stahl gebildet.

Der Befestigungsdorn 120 weist einen ersten Abschnitt 121 auf, in welchem er sich geradlinig erstreckt und in welchem ein erster Vorsprung 123 mit einem rampenförmigen Querschnitt und ein zweiter Vorsprung 124 in einem rechteckigen Querschnitt ausgebildet sind. Die beiden ersten und zweiten Vorsprünge 123 und 124 sind so voneinander beabstandet, dass zwischen ihnen ein von dem Befestigungsdorn 120 durchsetzter Abgasgummi 300 anordenbar ist. Dabei erleichtert der rampenförmige Querschnitt des ersten Vorsprungs 123 ein Eindringen des Befestigungsdorns 120 in eine Öffnung im Abgasgummi 300. Die Öffnung im Abgasgummi 300 ist in Figur 1D nicht ersichtlich, da sich das Abgasgummi 300 aufgrund seiner Elastizität eng an den Befestigungsdorn 120 anlegt. Die ersten und zweiten Vorsprünge 123 und 124 hindern den Befestigungsdorn an einer übermäßigen Relativbewegung in Bezug auf den Abgasgummi 300. In der gezeigten Ausführungsform sind die ersten und zweiten Vorsprünge 123 und 124 einstückig mit dem Befestigungsdorn 120 ausgebildet.

In einem in Längsrichtung des Befestigungsdorns 120 an den ersten Abschnitt 121 angrenzenden zweiten Abschnitt 122 weist der Befestigungsdorn 120 einen S-förmigen Verlauf und einen konstanten Querschnitt auf; somit ist der Befestigungsdorn 120 im zweiten Abschnitt 122 frei von Vorsprüngen.

Weiter weist die Halterung 100 einen Träger 110 auf, der von einer ersten Platte 111 und einer zweiten Platte 112 gebildet wird. Die ersten und zweiten Platten 111, 112 sind in der gezeigten Ausführungsform beide aus Feinblech mit einer Materialstärke von 3 mm gebildet. Die erste Platte 111 weist einen insgesamt S-förmigen Querschnitt auf. Ein Befestigungsabschnitt 113 der ersten Platte 111 des Trägers 110 ist parallel zu einem Abschnitt der ersten Platte 111 angeordnet, in welchem eine Öffnung 115 angeordnet ist. Die zweite Platte 112 weist einen abgewinkelten Befestigungsabschnitt 114 auf, welcher mit einem Abschnitt der zweiten Platte 112, in welchem eine Öffnung 116 angeordnet ist, einen Winkel $\alpha$ von 90° einschließt. Dieser Winkel von 90° wird auch zwischen dem Befestigungsabschnitt 113 der ersten Platte 111 und dem Befestigungsabschnitt 114 der zweiten Platte 112 eingeschlossen. Die Befestigungsabschnitte 113, 114 dienen dazu, die ersten und zweiten Platten 111, 112 des Trägers 110 an einer Komponente einer Abgasanlage zu befestigen, wie es in den Figuren 1A und 1C gezeigt ist.

Wie aus den Figuren 1A und 1C ersichtlich, ist der Befestigungsabschnitt 113 der ersten Platte 111 über eine Schweißnaht 141 an einer Stirnseite eines Abgastopfes 200 befestigt und ist der Befestigungsabschnitt 114 der zweiten Platte 112 mittels einer Schweißnaht 141 an einer Mantelfläche des Abgastopfes 200 befestigt. Dabei sind die ersten und zweiten Platten 111, 112 des Trägers zueinander parallel angeordnet, wenn die ersten und zweiten Platten 111, 112 am Abgastopf 200 befestigt sind.

Alternativ zur Befestigung an einer Komponente einer Abgasanlage können die Befestigungsabschnitte 113, 114 des Trägers 110 auch an einem Unterboden eines Fahrzeugs befestigt sein. Dies ist in den Figuren jedoch nicht gezeigt. Weiter sind die ersten und zweiten Platten in der gezeigten Ausführungsform unterschiedlich ausgebildet. Die vorliegende Erfindung ist hierauf jedoch nicht beschränkt, so dass die ersten und zweiten Platten alternativ auch gleich ausgebildet sein können. Insbesondere können die ersten und zweiten Platten beispielsweise alternativ auch beide einen abgewinkelten Befestigungsabschnitt aufweisen.

Die ersten und zweiten Platten 111, 112 des Trägers 110 weisen jeweils eine Öffnung 115, 116 auf, welche die jeweilige Platte vollständig durchsetzt. In dem in den Figuren 1A und 1D gezeigten montierten Zustand der Halterung 100 durchsetzt der Befestigungsdorn 120 die Öffnungen 115, 116 der ersten und zweiten Platten 111, 112 des Trägers 110. Dabei weist die Öffnung 115 in der ersten Platte 111 einen Durchmesser $D_{115}$ auf, der mit 18 mm um 87 % größer als ein Durchmesser $D_{120}$ des Befestigungsdorns 120 von 9,6 mm in dem Bereich ist, in welchem er die erste Platte 111 durchsetzt. Auch die Öffnung 116 in der zweiten Platte 112 des Trägers 110 weist einen Durchmesser $D_{116}$ auf, welcher mit 18 mm um 87 % größer als der Durchmesser $D_{112}$ des Befestigungsdorns 120 von 9,6 mm in dem Bereich ist, in welchem er die zweite Platte 112 durchsetzt. Somit wird der Befestigungsdorn 120 von den Platten 111, 112 des Trägers 110 mit Spiel getragen, wenn der Befestigungsdorn 120 die Öffnungen 115 und 116 der ersten und zweiten Platten 111, 112 des Trägers 110 durchsetzt. In der Folge kann der Befestigungsdorn 120 sowohl in Richtung längs der Öffnungen 115, 116 (und damit in Längsrichtung des Befestigungsdorns 120) als auch in Richtung quer zu den Öffnungen 115, 116 (und damit in einer Richtung die auf die Längsrichtung des Befestigungsdorns 120 senkrecht steht) ausgerichtet werden. Auch eine Verkippung des Befestigungsdorns 120 ist möglich. Wie aus den Figuren 1A und 1D ersichtlich, sind Lochnormalen auf die Öffnungen 115 und 116 in den ersten und zweiten Platte 111, 112 des Trägers 110 parallel ausgerichtet. Die Mitten der Öffnungen 115, 116 der ersten und zweiten Platten 111, 112 sind nicht entlang einer gemeinsamen Lochnormalen angeordnet, so dass die Öffnungen 115, 116 relativ zueinander versetzt angeordnet sind.

Die Halterung 100 umfasst weiter eine erste Metallscheibe 131 und eine zweite Metallscheibe 132. Die ersten und zweiten Metallscheiben 131 und 132 weisen in dieser Ausführungsform jeweils eine Öffnung auf, die geringfügig größer als der Durchmesser $D_{120}$ des Befristungsdorns 120 ist und sind vom Befestigungsdorn 120 unabhängige Komponenten. Wie in den Figuren 1B, 1C und 1D gezeigt, werden die ersten und zweiten Metallscheiben 131, 132 so von dem Befestigungsdorn 120 durchsetzt, dass die ersten und zweiten Platten 111, 112 des Trägers 110 zwischen den beiden ersten und zweiten Metallscheiben 131, 132 angeordnet sind. In der gezeigten Ausführungsform weisen die beiden Metallscheiben 131 und 132 mit 25 mm jeweils einen Durchmesser auf, der größer als der Durchmesser $D_{115}$, $D_{116}$ der Öffnungen 115, 116 in der ersten und zweiten Platte 111, 112 des Trägers 110 ist.

Um den Befristungsdorn 120 in seiner Orientierung und Lage in Bezug auf die ersten und zweiten Platten 111, 112 des Trägers 100 festzulegen, wenn die ersten und zweiten Platten 111, 112 beispielsweise an einem Abgastopf 200 befestigt sind, werden die ersten und zweiten Metallplatten 131 und 132 nach einer Ausrichtung des Befristungsdorns 120 mit den jeweils benachbarten ersten und zweiten Platten 111, 112 in Anlage gebracht und über Schweißnähte 143 mit diesen ersten und zweiten Platten 111, 112 verschweißt. Anschließend wird der Befestigungsdorn 120 über Schweißnähte 142 ringförmig mit den ersten und zweiten Metallscheiben 131, 132 verschweißt. In der Folge ist der Befestigungsdorn 120 in seiner Position und Lage in Bezug auf die ersten und zweiten Platten 111, 112 dauerhaft festgelegt. Alternativ kann auch zunächst der Befestigungsdorn 120 mit den ersten und zweiten Metallscheiben 131, 132 verschweißt werden, und können anschließend die ersten und zweiten Metallscheiben 131, 132 an den ersten und zweiten Platten 111, 112 des Trägers 110 festgeschweißt werden.

Im Folgenden wird unter Bezugnahme auf die Figuren 2A und 2B eine zweite Ausführungsform der erfindungsgemäßen Halterung 100 für eine Abgasanlage beschrieben.

Dabei zeigt Figur 2A eine schematische perspektivische Ansicht der Halterung in einem unmontierten Zustand und zeigt Figur 2B einen in der Figur 2A verwendeten Träger der Halterung in einem Zustand, in dem der Träger in eine Ebene entfaltet ist. Zur Vermeidung von Wiederholungen wird nur auf Unterschiede zur vorstehenden ersten Ausführungsform eingegangen und ansonsten auf die vorstehende erste Ausführungsform verwiesen.

Die Halterung 100 gemäß der zweiten Ausführungsform unterscheidet sich von der Halterung 100 gemäß der vorstehend beschriebenen ersten Ausführungsform zum einen dadurch, dass die erste Metallscheibe 131 nicht lose auf dem Befestigungsdorn 120 aufgesteckt, sondern einstückig mit dem Befestigungsdorn 120 ausgebildet ist. Hierdurch wird die Anzahl der verwendeten Teile reduziert.

Weiter unterscheidet sich die zweite Ausführungsform von der vorstehend beschriebenen ersten Ausführungsform dadurch, dass die zweite Metallscheibe 132 ebenfalls nicht lose an dem Befestigungsdorn 120 geführt ist, sondern als Klemmscheibe ausgebildet und somit durch Kraftschluss mit dem Befestigungsdorn 120 verbunden ist. Hierfür weist die zweite Metallscheibe 132 eine Öffnung auf, deren Durchmesser geringfügig kleiner als der Durchmesser $D_{120}$ des Befestigungsdorns 120 ist. Im Bereich der Öffnung ist die zweite Metallscheibe 132 elastisch ausgebildet.

Weiter unterscheidet sich die zweite Ausführungsform von der vorstehend beschriebenen ersten Ausführungsform dadurch, dass der Träger 110 gemäß der zweiten Ausführungsform einstückig ausgebildet ist. Dies ist besonders gut in Figur 2B ersichtlich. Die ersten und zweiten Platten 111, 112 des Trägers sind durch einen Verbindungsabschnitt 117 miteinander verbunden. Somit kann der Träger 110 durch Biegen aus einem Blechstück hergestellt werden. Dabei sind in Figur 2B biegekanten in gestrichelten Linien gezeigt.

Wie aus Figur 2B ersichtlich, ist der Befestigungsabschnitt 113 der ersten Platte 111 des Trägers 110 um einen Abstand $A_{113}$ von der Öffnung 115 in der ersten Platte 111 beabstandet. Dieser Abstand $A_{113}$ ist in der zweiten Ausführungsform ebenso wie in der vorstehend beschriebenen ersten Ausführungsform wesentlich größer als ein Abstand $A_{114}$ zwischen dem Befestigungsabschnitt 114 der zweiten Platte 112 des Trägers 110 und der Öffnung 116 in der zweiten Platte 112 des Trägers 110. Auf diese Weise ist es möglich, Befestigungsabschnitte 113, 114 einmal an der Stirnseite und einmal an der Mantelfläche eines Abgastopfs 200 zu befestigen, wie es in den Figuren 1A und 1C gezeigt ist. In der Figur 2B beträgt der Abstand $A_{113}$ zwischen dem Befestigungsabschnitt 113 und der Öffnung 115 in der ersten Platte 111 das Vierfache des Abstandes $A_{114}$ zwischen dem Befestigungsabschnitt 114 und der Öffnung 116 in der zweiten Platte 112.

Die Montage der erfindungsgemäßen Halterung gemäß der ersten oder zweiten Ausführungsform erfolgt auf folgende Weise:

Zunächst werden Befestigungsabschnitte 113, 114 von ersten und zweiten Platten 111, 112 eines Trägers 110 an einer Komponente einer Abgasanlage 200 oder einem Unterboden eines Fahrzeugs (nicht gezeigt) befestigt. Dies kann beispielsweise durch Schweißen oder Kleben oder Löten erfolgen. Dies erfolgt in einer Weise, dass die beiden ersten und zweiten Platten 111, 112 zueinander parallel sind oder in Ebenen liegen, die miteinander einen Winkel von weniger als 20° einschließen. Anschließend wird eine erste Metallscheibe 131 auf einen Befestigungsdorn 120 aufgefädelt, sofern eine solche erste Metallscheibe 131 nicht bereits einstückig mit dem Befestigungsdorn 120 ausgebildet ist. Anschließend wird der Befestigungsdorn 120 mit der von ihm getragenen ersten Metallscheibe 131 durch die Öffnungen 115, 116 in den ersten und zweiten Platten 111, 112 des Trägers 110 hindurchgefädelt. Anschließend wird eine zweite Metallscheibe 132 auf den Befestigungsdorn 120 aufgesteckt, so dass die zweite Metallscheibe 132 den Befestigungsdorn 120 in Umfangsrichtung umgibt und die ersten und zweiten Platten 111, 112 zwischen den ersten und zweiten Metallscheiben 131, 132 angeordnet sind. Danach wird der Befestigungsdorn 120 in seiner Position und Lage so ausgerichtet, wie es zum Tragen der Abgasanlage erforderlich ist. Anschließend werden die ersten und zweiten Metallscheiben 131, 132 mit den jeweils benachbarten ersten und zweiten Platten 111, 112 in Anlage gebracht und mit den ersten und zweiten Platten 111, 112 und dem Befestigungsdorn 120 ringförmig verschweißt.

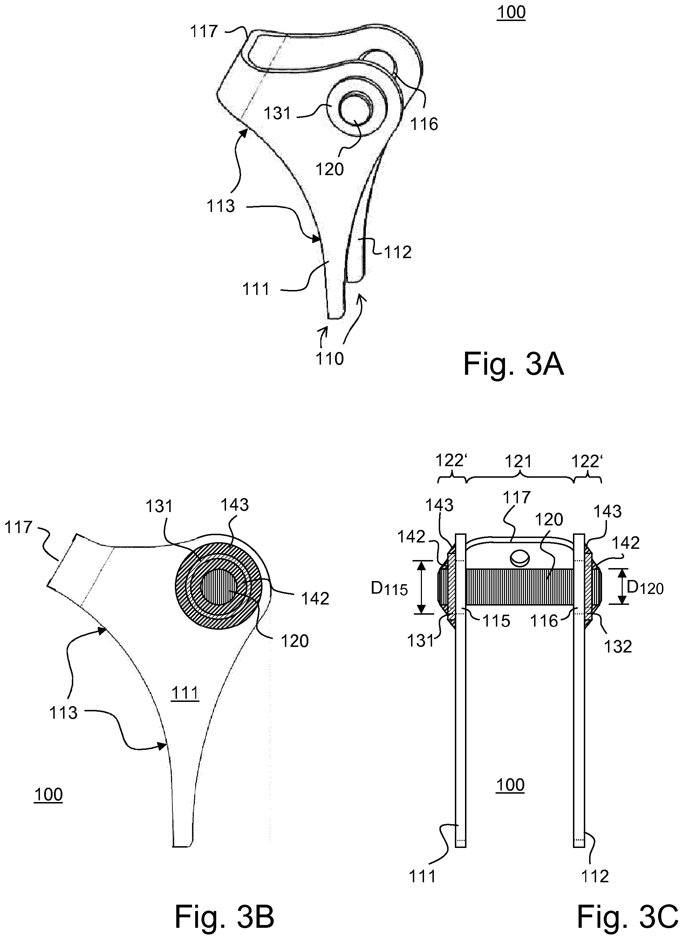

Im Folgenden wird unter Bezugnahme auf die Figuren 3A bis 3C eine dritte Ausführungsform einer justierbaren Halterung für eine Abgasanlage beschrieben.

Dabei zeigt Figur 3A eine perspektivische Ansicht der Halterung 100 in einem fertig montierten Zustand, die Figur 3B eine Seitenansicht der Halterung 100, wobei die Halterung 100 so orientiert ist, dass eine erste Platte 111 der Halterung 100 in der Zeichnungsebene liegt, und Figur 3C eine weitere Seitenansicht der Halterung 100, wobei die Halterung 100 so orientiert ist, dass die erste Platte 111 und eine zweite Platte 112 der Halterung 100 senkrecht zu der Zeichnungsebene orientiert sind. Um das Verständnis der Erfindung zu erleichtern, sind in den Figuren 3B und 3C ausgewählte Elemente durch Schraffur hervorgehoben. Dabei wurde für gleiche Elemente wie in den vorstehend beschriebenen ersten und zweiten Ausführungsformen die gleiche Schraffur verwendet. Weiter wurden in Fig. 3C Öffnungen 115, 116 in den ersten und zweiten Platten 111, 112 durch gestrichelte Linien kenntlich gemacht.

Wie besonders gut aus den Figuren 3A und 3C ersichtlich, weist die Halterung 100 einen als geraden Bolzen ausgebildeten Befestigungsdorn 120 mit kreisförmigem Querschnitt auf. Anders als in den vorstehend beschriebenen ersten und zweiten Ausführungsformen ist in der dritten Ausführungsform ein erster Abschnitt 121 des Befestigungsdorns 120, der dazu ausgebildet ist, einen (nicht gezeigten) Abgasgummi zu durchdringen, nicht neben einem Träger 110 der Halterung 100 angeordnet, sondern im Inneren des Trägers 110. Hierfür weist der Befestigungsdorn 120 zwei voneinander beabstandete zweite Abschnitte 122' auf, in welchen der Befestigungsdorn 120 zwei symmetrisch ausgebildete und zueinander parallel angeordnete erste und zweite Platten 111, 112 des Trägers 110 durchdringt. Hierfür weisen die ersten und zweiten Platten 111, 112 des Trägers jeweils Öffnungen 115, 116 auf, welche vom Befestigungsdorn 120 durchsetzt werden. Der erste Abschnitt 121 des Befestigungsdorns 120 ist somit zwischen den beiden zweiten Abschnitten 122' des Befestigungsdorns 120 angeordnet. Statt einen Befestigungsgummi einer Abgasanlage zu durchdringen kann der erste Abschnitt 121 des Befestigungsdorns 120 auch mit einem Haken, der über ein Toleranzelement (wie beispielsweise eine Feder) mit dem Unterboden eines Fahrzeugs verbunden ist, in Eingriff kommen.

Wie in der zweiten Ausführungsform sind die den Träger 110 der dritten Ausführungsform bildenden ersten und zweiten Platten 111, 112 einstückig ausgebildet und über einen Verbindungsabschnitt 117 miteinander verbunden.

In der dritten Ausführungsform weisen die ersten und zweiten Platten 111, 112 jeweils einen Befestigungsabschnitt 113 auf, der entlang einer gekrümmten Außenkante der ersten und zweiten Platten 111, 112 verläuft. In den Figuren 3A, 3B und 3C ist nur der Befestigungsabschnitt 113 der ersten Platte 111 sichtbar, da der Befestigungsabschnitt der zweiten Platte 112 von der ersten Platte 111 verdeckt wird. Die Krümmung der Befestigungsabschnitte ist an das Gehäuse eines (nicht gezeigten) Abgaskonverters angepasst.

Wie in den ersten und zweiten Ausführungsformen weisen die Öffnungen 115, 116 in den ersten und zweiten Platten 111, 112 des Trägers 110 jeweils einen gleich großen Durchmesser $D_{115}$ auf, der wenigstens 10 % größer als ein Durchmesser $D_{120}$ des Befestigungsdorns 120 in dem Bereich ist, in welchem er die erste Platte 111 und die zweite Platte 112 durchsetzt. Somit wird der Befestigungsdorn 120 von den Platten 111, 112 des Trägers 110 mit Spiel getragen, wenn der Befestigungsdorn 120 die Öffnungen 115 und 116 der ersten und zweiten Platten 111, 112 des Trägers 110 durchsetzt. In der Folge kann der Befestigungsdorn 120 in Richtung quer zu den Öffnungen 115, 116 (und damit in einer Richtung die auf die Längsrichtung des Befestigungsdorns 120 senkrecht steht) ausgerichtet werden. Ersichtlich sind in der dritten Ausführungsform die Mitten der Öffnungen 115, 116 der ersten und zweiten Platten 111, 112 entlang einer gemeinsamen Lochnormalen angeordnet, so dass die Öffnungen 115, 116 miteinander fluchten.

Wie in den ersten und zweiten Ausführungsformen umfasst auch in der dritten Ausführungsform die Halterung 100 weiter eine erste Metallscheibe 131 und eine zweite Metallscheibe 132. Die ersten und zweiten Metallscheiben 131 und 132 weisen auch in der dritten Ausführungsform jeweils eine Öffnung auf, die geringfügig größer als der Durchmesser $D_{120}$ des Befestigungsdorns 120 ist und sind vom Befestigungsdorn 120 unabhängige Komponenten. Wie in den Figuren 3A und 3C gezeigt, werden die ersten und zweiten Metallscheiben 131, 132 so von dem Befestigungsdorn 120 durchsetzt, dass die ersten und zweiten Platten 111, 112 des Trägers 110 zwischen den beiden ersten und zweiten Metallscheiben 131, 132 angeordnet sind. In der gezeigten Ausführungsform weisen die beiden Metallscheiben jeweils einen Durchmesser auf, der größer als der Durchmesser $D_{115}$ der Öffnungen 115, 116 in der ersten und zweiten Platte 111, 112 des Trägers 110 ist.

Um den Befestigungsdorn 120 in seiner Orientierung und Lage in Bezug auf die ersten und zweiten Platten 111, 112 des Trägers 100 festzulegen, wenn die ersten und zweiten Platten 111, 112 beispielsweise an einem Abgastopf 200 befestigt sind, werden die ersten und zweiten Metallplatten 131 und 132 nach einer Ausrichtung des Befestigungsdorns 120 mit den jeweils benachbarten ersten und zweiten Platten 111, 112 in Anlage gebracht und über Schweißnähte 143 ringförmig mit diesen ersten und zweiten Platten 111, 112 verschweißt. Anschließend wird der Befestigungsdorn 120 über Schweißnähte 142 ringförmig mit den ersten und zweiten Metallscheiben 131, 132 verschweißt. In der Folge ist der Befestigungsdorn 120 in seiner Position und Lage in Bezug auf die ersten und zweiten Platten 111, 112 dauerhaft festgelegt. Alternativ kann auch zunächst der Befestigungsdorn 120 mit den ersten und zweiten Metallscheiben 131, 132 verschweißt werden, und können anschließend die ersten und zweiten Metallscheiben 131, 132 an den ersten und zweiten Platten 111, 112 des Trägers 110 festgeschweißt werden.

Die Halterung 100 gemäß der dritten Ausführungsform eignet sich besonders gut zum Haltern von schweren Komponenten einer Abgasanlage, wie sie beispielsweise bei Lastkraftwägen verwendet werden.

Obwohl die voranstehenden Ausführungsbeispiele der vorliegenden Erfindung lediglich beispielhaft erläutert worden sind, werden die Fachleute erkennen, dass zahlreiche Modifikationen, Hinzufügungen und Ersetzungen möglich sind, ohne von dem Schutzbereich und Geist der in den nachfolgenden Ansprüchen offenbarten Erfindung abzuweichen.

Bezugszeichenliste

100    Halterung für eine Abgasanlage

110    Träger
111    erste Platte des Trägers
112    zweite Platte des Trägers
113    Befestigungsabschnitt der ersten Platte des Trägers
$A_{113}$    Abstand des Befestigungsabschnitts von der Öffnung in der ersten Platte
114    Befestigungsabschnitt der zweiten Platte des Trägers
$A_{114}$    Abstand des Befestigungsabschnitts von der Öffnung in der zweiten Platte
$\alpha$    von dem Befestigungsabschnitt der zweiten Platte eingeschlossener Winkel
115    Öffnung in der ersten Platte des Trägers
$D_{115}$    Durchmesser der Öffnung in der ersten Platte des Trägers
116    Öffnung in der zweiten Platte des Trägers
$D116$    Durchmesser der Öffnung in der zweiten Platte des Trägers
117    Verbindungsabschnitt

120    Befestigungsdorn
$D_{120}$    Durchmesser des Befestigungsdorns
121    erster Abschnitt des Befestigungsdorns
122    zweiter Abschnitt des Befestigungsdorns
122'    zweiter Abschnitt des Befestigungsdorns
123    erster Vorsprung des Befestigungsdorns
124    zweiter Vorsprung des Befestigungsdorns

131    erste Metallscheibe
132    zweite Metallscheibe

141    Schweißnaht zwischen Träger und Komponente der Abgasanlage
142    Schweißnaht zwischen Befestigungsdorn und Metallscheibe
143    Schweißnaht zwischen Metallscheibe und Platte des Trägers

200    Komponente einer Abgasanlage

300    Auspuffgummi

**Patentansprüche**

**1.**    Halterung (100) für eine Abgasanlage, aufweisend:

einen an einer Komponente der Abgasanlage (200) oder einem Unterboden eines Fahrzeugs befestigbaren Träger (110); und
einen von dem Träger (110) getragenen Befestigungsdorn (120);
wobei der Träger (110) eine erste Platte (111) und eine von der ersten Platte (111) beabstandete zweite Platte (112) aufweist,
wobei die erste Platte (111) und die zweite Platte (112) jeweils einen Befestigungsabschnitt (113, 114) für eine Befestigung des Trägers (110) an einer Komponente des Abgasanlage (200) oder einem Unterboden eines Fahrzeugs aufweisen, und
wobei die erste Platte (111) und die zweite Platte (112) jeweils eine Öffnung (115, 116) aufweisen,
wobei der Befestigungsdorn (120) einen ersten Abschnitt (121) aufweist, der ausgebildet ist, einen Auspuffgummi zu durchsetzen, und einen zweiten Abschnitt (122) aufweist, in welchem er die Öffnungen (115, 116) in den ersten und zweiten Platten (111, 112) des Trägers (110) durchdringt,

**dadurch gekennzeichnet, dass**

die Öffnungen (115, 116) in den ersten und zweiten Platten (111, 112) des Trägers (110) einen Durchmesser ($D_{115}$, $D_{116}$) aufweisen, der wenigstens 10% oder wenigstens 20 % oder wenigstens 30 % größer ist als ein Durchmesser ($D_{120}$) des Befestigungsdorns (120) in dem Bereich, in welchem er die jeweilige Öffnung (115, 116) durchdringt; und

der Befestigungsdorn (120) im zweiten Abschnitt (122) zwei voneinander beabstandete Metallscheiben (131, 132) aufweist, wobei die Metallscheiben (131, 132) jeweils den Befestigungsdorn (120) umgeben, und wobei die beiden ersten und zweiten Platten (111, 112) des Trägers (110) zwischen den beiden Metallscheiben (131, 132) angeordnet sind, und/oder wobei die Metallscheiben (131, 132) so am Befestigungsdorn (120) angeordnet sind, dass jeweils eine der beiden ersten und zweiten Platten (111, 112) des Trägers (110) unmittelbar benachbart zu einer der beiden Metallscheiben (131, 132) angeordnet ist.

2. Halterung nach Anspruch 1, wobei die Öffnungen (115, 116) in den ersten und zweiten Platten (111, 112) des Trägers (110) einen Durchmesser ($D_{115}$, $D_{116}$) aufweisen, der höchstens 150 % oder höchstens 90 % oder höchstens 80 % größer ist als der Durchmesser ($D_{120}$) des Befestigungsdorns (120) in dem Bereich, in welchem er die jeweilige Öffnung (115, 116) durchdringt.

3. Halterung nach Anspruch 1 oder 2, wobei der Befestigungsdorn (120) im Bereich der Öffnungen (115, 116) in den ersten und zweiten Platten (111, 112) des Trägers (110) mit den ersten und zweiten Platten (111, 112) des Trägers (110) verschweißt ist.

4. Halterung nach einem der Ansprüche 1 bis 3, wobei die Metallscheibe (131), die näher am ersten Abschnitt des Befestigungsdorns (120) angeordnet ist, als die andere Metallscheibe, einstückig mit dem Befestigungsdorn (120) ausgebildet ist.

5. Halterung nach einem der Ansprüche 1 bis 4,
wobei wenigstens eine der Metallscheiben (131, 132) durch Kraftschluss mit dem Befestigungsdorn (120) verbunden ist; und/oder
wobei wenigstens eine der Metallscheiben (131, 132) durch Verschweißen mit dem Befestigungsdorn (120) verbunden ist; und/oder
wobei wenigstens eine der Metallscheiben (131, 132) durch Verlöten mit dem Befestigungsdorn (120) verbunden ist; und/oder
wobei wenigstens eine der Metallscheiben (131, 132) durch Verkleben mit dem Befestigungsdorn (120) verbunden ist.

6. Halterung nach einem der Ansprüche 1 bis 5, wobei jede der Metallscheiben (131, 132) mit der ihr nächstbenachbarten ersten oder zweiten Platten (111, 112) des Trägers (110) verschweißt ist.

7. Halterung nach einem der Ansprüche 1 bis 6,
wobei Lochnormalen der Öffnungen (115, 116) in den ersten und zweiten Platten (111, 112) des Trägers (110) voneinander beabstandet sind; und
wobei sich der Befestigungsdorn (120) im ersten Abschnitt (121) geradlinig und im zweiten Abschnitt (122) S-förmig erstreckt.

8. Halterung nach einem der Ansprüche 1 bis 7,
wobei die ersten und zweiten Platten (111, 112) des Trägers (110) zueinander parallel sind; oder
wobei die ersten und zweiten Platten (111, 112) des Trägers (110) in Ebenen liegen, die miteinander einen Winkel von weniger als 20° oder einen Winkel von weniger als 10° oder einen Winkel von weniger als 5° einschließen.

9. Halterung nach einem der Ansprüche 1 bis 8,
wobei der Befestigungsdorn (120) und die Öffnungen (115, 116) in den ersten und zweiten Platten (111, 112) des Trägers (110) einen kreisförmigen Querschnitt aufweisen; oder
wobei der Befestigungsdorn (120) und die Öffnungen (115, 116) in den ersten und zweiten Platten (111, 112) des Trägers (110) einen ovalen Querschnitt aufweisen; oder
wobei der Befestigungsdorn (120) und die Öffnungen (115, 116) in den ersten und zweiten Platten (111, 112) des Trägers (110) einen dreieckigen Querschnitt aufweisen; oder
wobei der Befestigungsdorn (120) und die Öffnungen (115, 116) in den ersten und zweiten Platten (111, 112) des Trägers (110) einen viereckigen Querschnitt aufweisen; oder
wobei der Befestigungsdorn (120) und die Öffnungen (115, 116) in den ersten und zweiten Platten (111, 112) des Trägers (110) einen mehreckigen Querschnitt aufweisen.

10. Halterung nach einem der Ansprüche 1 bis 9, wobei der Befestigungsdorn (120) im ersten Abschnitt (121) zwei voneinander beabstandete Vorsprünge (123, 124) aufweist, wobei der Vorsprung (123) der weiter von dem zweiten Abschnitt (122) des Befestigungsdorns (120) beabstandet ist, auf der dem zweiten Abschnitt (122) des Befestigungsdorns (120) abgewandten Seite des Vorsprungs (123) eine Rampe aufweist.

11. Halterung nach einem der Ansprüche 1 bis 10, wobei der Träger einstückig aus einem Blechmaterial ausgebildet ist und die ersten und zweiten Platten (111, 112) des Trägers (110) durch einen Verbindungsabschnitt (117) verbunden sind.

12. Halterung nach einem der Ansprüche 1 bis 11,
wobei der Befestigungsabschnitt (113) der ersten Platte des Trägers (110), welche erste Platte (111) näher an dem ersten Abschnitt (121) des Befestigungsdorns (120) angeordnet ist, als die zweite Platte (112) des Trägers (110), parallel zu dieser ersten Platte ausgerichtet ist, und
wobei der Befestigungsabschnitt (114) der zweiten Platte des Trägers (110), welche zweite Platte (112) von dem ersten Abschnitt des Befestigungsdorns (120) weiter beabstandet angeordnet ist, als die erste Platte (111) des Trägers (110), mit dieser zweiten Platte (112) einen Winkel (a) größer 60° oder einen Winkel (a) größer 80° oder einen Winkel (a) gleich 90° einschließt.

13. Halterung nach einem der Ansprüche 1 bis 12, wobei der Befestigungsabschnitt (113) der ersten Platte des Trägers (110), welche erste Platte (111) näher an dem ersten Abschnitt (121) des Befestigungsdorns (120) angeordnet ist, als die zweite Platte (112) des Trägers (110), wenigstens doppelt so weit von der Öffnung (115, 116) in der ersten Platte beabstandet ist, wie der Befestigungsabschnitt (114) der zweiten Platte (112) des Trägers (110) von der Öffnung (115, 116) in der zweiten Platte (112).

14. Verfahren zu Befestigung einer Halterung für eine Abgasanlage, aufweisend die folgenden Schritte:

Verschweißen eines ersten Befestigungsabschnitts (113) einer ersten Platte (111) eines Trägers (110) an einer Komponente (200) der Abgasanlage oder einem Unterboden eines Fahrzeugs;
Verschweißen eines zweiten Befestigungsabschnitts (114) einer zweiten Platte (112) des Trägers (110) an der Komponente (200) der Abgasanlage oder dem Unterboden des Fahrzeugs so, dass die beiden ersten und zweiten Platten (111, 112) voneinander beabstandet sind, und dass die beiden ersten und zweiten Platten (111, 112) zueinander parallel sind oder in Ebenen liegen, die miteinander einen Winkel von weniger als 20° einschließen;
Anordnen eines zweiten Abschnitts eines Befestigungsdorns (120), der eine erste Metallscheibe (131) trägt, in Öffnungen (115, 116), die in die Platten des Trägers (110) eingebracht sind so, dass die erste Metallscheibe (131) außerhalb der beiden Platten (111, 112) des Trägers (110) angeordnet ist, wobei der Befestigungsdorn (120) einen ersten Abschnitt (121) aufweist, der ausgebildet ist, einen Auspuffgummi zu durchsetzen, und wobei die Öffnungen (115, 116) in den Platten des Trägers (110) einen Durchmesser aufweisen, der wenigstens 10 % größer ist als ein Durchmesser des Befestigungsdorns (120) in dem Bereich, in welchem er die jeweilige Öffnung (115, 116) durchdringt;
Anordnen einer zweiten Metallscheibe (132) mit einem zentralen Durchgang an dem Befestigungsdorn (120) so, dass die beiden Platten des Trägers (110) zwischen der ersten und zweiten Metallscheibe (131, 132) angeordnet sind, wobei jeweils eine der Metallscheiben (131, 132) an einer zugehörigen Platte (111, 112) des Trägers (110) anliegt;
Ausrichten des ersten Abschnitts des Befestigungsdorns (120) in Bezug auf die Komponente (200) der Abgasanlage oder den Unterboden des Fahrzeugs; und
Verschweißen der Metallscheiben (131, 132) mit den zugehörigen Platten (111, 112) und dem Befestigungsdorn (120).

**Claims**

1. A mount (100) for an exhaust system, comprising:

a support (110) configured for being fixed to a component of the exhaust system (200) or to an underbody of a vehicle; and

a mounting mandrel (120) supported by the support (110);
wherein the support (110) comprises a first plate (111) and a second plate (112) spaced apart from the first plate (111),
wherein the first plate (111) and the second plate (112) each comprise a fixing section (113, 114) for fixing the support (110) to a component of the exhaust system (200) or to an underbody of a vehicle, and
wherein the first plate (111) and the second plate (112) each comprise an opening (115, 116),
wherein the mounting mandrel (120) comprises a first section (121) configured to penetrate through an exhaust system rubber, and a second section (122) in which it penetrates the openings (115, 116) in the first and second plates (111, 112) of the support (110),

**characterized in, that**

the openings (115, 116) in the first and second plates (111, 112) of the support (110) have a diameter ($D_{115}$, $D_{116}$) that is by at least 10 % or by at least 20 % or by at least 30 % bigger than a diameter ($D_{120}$) of the mounting mandrel (120) at the region, where it penetrates through the respective opening (115, 116); and
wherein the mounting mandrel (120) comprises two spaced apart metal disks (131, 132) in the second section (122), wherein the metal disks (131, 132) each surround the mounting mandrel (120), and
wherein both of the first and second plates (111, 112) of the support (110) are located between the two metal disks (131, 132) and/or
wherein the metal disks (131, 132) are arranged at the mounting mandrel (120) in a way that each one of the first and second plates (111, 112) of the support (110) is located directly adjacent to one of the two metal disks (131, 132).

2. The mount according to claim 1, wherein the openings (115, 116) in the first and second plates (111, 112) of the support (110) have a diameter ($D_{115}$, $D_{116}$) that is by not more than 150 % or not more than 90 % or not more than 80% bigger than the diameter ($D_{120}$) of the mounting mandrel (120) at the region, where it penetrates through the respective opening (115, 116).

3. The mount according to claim 1 or 2, wherein the mounting mandrel (120) is welded to the first and second plates (111, 112) of the support (110) at the region of the openings (115, 116) in the first and second plates (111, 112) of the support (110).

4. The mount according to one of claims 1 to 3, wherein the metal disks (131) located closer to the first section of the mounting mandrel (120) than the other metal disk is formed integrally with the mounting mandrel (120).

5. The mount according to one of claims 1 to 4,
wherein at least one of the metal disks (131, 132) is joined to the mounting mandrel (120) by frictional connection; and/or
wherein at least one of the metal disks (131, 132) is joined to the mounting mandrel (120) by welding; and/or
wherein at least one of the metal disks (131, 132) is joined to the mounting mandrel (120) by brazing; and/or
wherein at least one of the metal disks (131, 132) is joined to the mounting mandrel (120) by adhesive bonding.

6. The mount according to one of claims 1 to 5, wherein each metal disk (131, 132) is welded to its most vicinal first or second plate (111, 112) of the support (110).

7. The mount according to one of claims 1 to 6,
wherein hole normals of the openings (115, 116) in the first and second plates (111, 112) of the support (110) are spaced apart; and
wherein the mounting mandrel (120) extends straight in the first section (121) and S-shaped in the second section (122).

8. The mount according to one of claims 1 to 7,
wherein the first and second plates (111, 112) of the support (110) are in parallel; or
wherein the first and second plates (111, 112) of the support (110) are in planes that confine an angle of less than 20° or an angle of less than 10° or an angle of less than 5°.

9. The mount according to one of claims 1 to 8,
wherein the mounting mandrel (120) and the openings (115, 116) in the first and second plates (111, 112) of the support (110) have a circular cross-section; or

wherein the mounting mandrel (120) and the openings (115, 116) in the first and second plates (111, 112) of the support (110) have an oval cross-section; or

wherein the mounting mandrel (120) and the openings (115, 116) in the first and second plates (111, 112) of the support (110) have a triangular cross-section; or

wherein the mounting mandrel (120) and the openings (115, 116) in the first and second plates (111, 112) of the support (110) have a tetragonal cross-section; or

wherein the mounting mandrel (120) and the openings (115, 116) in the first and second plates (111, 112) of the support (110) have polygonal cross-section.

10. The mount according to one of claims 1 to 9, wherein the mounting mandrel (120) comprises two spaced apart protrusions (123, 124) in the first section (121), with the protrusion (123) farther from the second section (122) of the mounting mandrel (120) comprising a ramp at the side of the protrusion (123) facing away from the second section (122) of the mounting mandrel (120).

11. The mount according to one of claims 1 to 10, wherein the support is formed in one piece from a metal sheet, and a connecting section (117) interconnects the first and second plates (111, 112) of the support (110).

12. The mount according to one of claims 1 to 11,
wherein the fixing section (113) of the first plate of the support (110) is oriented parallel to said first plate, whereby said first plate (111) is located closer to the first section (121) of the mounting mandrel (120) than the second plate (112) of the support (110), and
wherein the fixing section (114) of the second plate of the support (110) confines together with said second plate (112) an angle ($\alpha$) of more than 60° or an angle ($\alpha$) of more than 80° or an angle ($\alpha$) of 90°, wherein said second plate (112) is spaced farther away from the first section of the mounting mandrel (120) than the first plate (111) of the support (110).

13. The mount according to one of claims 1 to 12, wherein the fixing section (113) of the first plate of the support (110) is spaced apart at least as twice as far from the opening (115, 116) in the first plate than the fixing section (114) of the second plate (112) of the support (110) is spaced apart from the opening (115, 116) in the second plate (112), whereby the first plate (111) is located closer to the first section (121) of the mounting mandrel (120) than the second plate (112) of the support (110).

14. A method for installing a mount for an exhaust system comprising the following steps:

welding a first fixing section (113) of a first plate (111) of a support (110) to a component (200) of the exhaust system or an underbody of a vehicle;
welding a second fixing section (114) of a second plate (112) of a support (110) to the component (200) of the exhaust system or the underbody of the vehicle such that the two first and second plates (111, 112) are spaced apart, and such that the two first and second plates (111, 112) are in parallel or in planes confining an angle of less than 20°;
placing a second section of a mounting mandrel (120) carrying a first metal disk (131) in openings (115, 116) formed in the plates of the support (110) such that the first metal disk (131) is positioned outside the two plates (111, 112) of the support (110), with the mounting mandrel (120) comprising a first section (121) configured to penetrate through an exhaust system rubber, and with the openings (115, 116) in the plates of the support (110) having a diameter that is by at least 10 % bigger than a diameter of the mounting mandrel (120) in the region in which it penetrates through the respective opening (115, 116);
placing a second metal disk (132) having a central passage onto the mounting mandrel (120) such that the two plates of the support (110) are located between the first and the second metal disks (131, 132), with each of the metal plates (131, 132) abutting a corresponding plate (111, 112) of the support (110);
aligning the first section of the mounting mandrel (120) with respect to the component (200) of the exhaust system or the underbody of the vehicle; and
welding the metal disks (131, 132) to the respective plates (111, 112) and the mounting mandrel (120).

**Revendications**

1. Fixation (100) pour un système d'échappement, présentant :

un support (110) pouvant être fixé à un composant du système d'échappement (200) ou à un dessous de caisse d'un véhicule ; et

une broche d'attache (120) portée par le support (110) ;

dans laquelle le support (110) présente une première plaque (111) et une deuxième plaque (112) à distance de la première plaque (111),

dans laquelle la première plaque (111) et la deuxième plaque (112) présentent respectivement une section d'attache (113, 114) pour une attache du support (110) à un composant du système d'échappement (200) ou à un dessous de caisse d'un véhicule, et

dans laquelle la première plaque (111) et la deuxième plaque (112) présentent respectivement une ouverture (115, 116),

dans laquelle la broche d'attache (120) présente une première section (121), qui est réalisée pour traverser un caoutchouc de tuyau d'échappement, et une deuxième section (122), qui traverse les ouvertures (115, 116) dans les première et deuxième plaques (111, 112) du support (110),

**caractérisée en ce que**

les ouvertures (115, 116) dans les première et deuxième plaques (111, 112) du support (110) présentent un diamètre ($D_{115}$, $D_{116}$), qui est au moins 10 % ou au moins 20 % ou au moins 30 % plus grand qu'un diamètre ($D_{120}$) de la broche d'attache (120) dans la zone dans laquelle elle traverse l'ouverture (115, 116) respective ; et

la broche d'attache (120) présente dans la deuxième section (122) deux disques métalliques (131, 132) à distance l'un de l'autre, dans laquelle les disques métalliques (131, 132) entourent respectivement la broche d'attache (120), et

dans laquelle les deux première et deuxième plaques (111, 112) du support (110) sont agencées entre les deux disques métalliques (131, 132), et/ou

dans laquelle les disques métalliques (131, 132) sont agencés au niveau de la broche d'attache (120) de telle sorte que respectivement une des deux première et deuxième plaques (111, 112) du support (110) est agencée directement adjacente à un des deux disques métalliques (131, 132).

2. Fixation selon la revendication 1, dans laquelle les ouvertures (115, 116) dans les première et deuxième plaques (111, 112) du support (110) présentent un diamètre ($D_{115}$, $D_{116}$), qui est au maximum 150 % ou au maximum 90 % ou au maximum 80 % plus grand que le diamètre ($D_{120}$) de la broche d'attache (120) dans la zone, dans laquelle elle traverse l'ouverture (115, 116) respective.

3. Fixation selon la revendication 1 ou 2, dans laquelle la broche d'attache (120) est soudée aux première et deuxième plaques (111, 112) du support (110), dans la zone des ouvertures (115, 116) dans les première et deuxième plaques (111, 112) du support (110).

4. Fixation selon l'une des revendications 1 à 3, dans laquelle le disque métallique (131), qui est agencé plus près de la première section de la broche d'attache (120) que l'autre disque métallique, est réalisé d'un seul tenant avec la broche d'attache (120).

5. Fixation selon l'une des revendications 1 à 4,
dans laquelle au moins un des disques métalliques (131, 132) est relié à la broche d'attache (120) par adhérence ; et/ou
dans laquelle au moins un des disques métalliques (131, 132) est relié à la broche d'attache (120) par soudage ; et/ou
dans laquelle au moins un des disques métalliques (131, 132) est relié à la broche d'attache (120) par brasage ; et/ou
dans laquelle au moins un des disques métalliques (131, 132) est relié à la broche d'attache (120) par collage.

6. Fixation selon l'une des revendications 1 à 5, dans laquelle chacun des disques métalliques (131, 132) est soudé à la première ou deuxième plaque (111, 112) du support (110) qui en est la plus proche.

7. Fixation selon l'une des revendications 1 à 6,
dans laquelle des normales de trous des ouvertures (115, 116) dans les première et deuxième plaques (111, 112) du support (110) sont à distance l'une de l'autre ; et
dans laquelle la broche d'attache (120) s'étend de manière rectiligne dans la première section (121) et en forme de S dans la deuxième section (122).

8. Fixation selon l'une des revendications 1 à 7,

dans laquelle les première et deuxième plaques (111, 112) du support (110) sont parallèles l'une à l'autre ; ou dans laquelle les première et deuxième plaques (111, 112) du support (110) se trouvent dans des plans, qui forment l'un avec l'autre un angle inférieur à 20° ou un angle inférieur à 10° ou un angle inférieur à 5°.

9. Fixation selon l'une des revendications 1 à 8,
dans laquelle la broche d'attache (120) et les ouvertures (115, 116) dans les première et deuxième plaques (111, 112) du support (110) présentent une section transversale circulaire ; ou
dans laquelle la broche d'attache (120) et les ouvertures (115, 116) dans les première et deuxième plaques (111, 112) du support (110) présentent une section transversale ovale ; ou
dans laquelle la broche d'attache (120) et les ouvertures (115, 116) dans les première et deuxième plaques (111, 112) du support (110) présentent une section transversale triangulaire ; ou
dans laquelle la broche d'attache (120) et les ouvertures (115, 116) présentent dans les première et deuxième plaques (111, 112) du support (110) une section transversale carrée ; ou
dans laquelle la broche d'attache (120) et les ouvertures (115, 116) présentent dans les première et deuxième plaques (111, 112) du support (110) une section transversale polygonale.

10. Fixation selon l'une des revendications 1 à 9, dans laquelle la broche d'attache (120) présente dans la première section (121) deux saillies (123, 124) à distance l'une de l'autre, dans laquelle la saillie (123), qui est plus éloignée de la deuxième section (122) de la broche d'attache (120), présente une rampe sur le côté de la saillie (123) opposé à la deuxième section (122) de la broche d'attache (120).

11. Fixation selon l'une des revendications 1 à 10, dans laquelle le support est réalisé d'un seul tenant en un matériau de tôle et les première et deuxième plaques (111, 112) du support (110) sont reliées par une section de raccordement (117).

12. Fixation selon l'une des revendications 1 à 11,
dans laquelle la section d'attache (113) de la première plaque du support (110) est orientée parallèlement à cette première plaque, laquelle première plaque (111) est agencée plus près de la première section (121) de la broche d'attache (120) que la deuxième plaque (112) du support (110), et
dans laquelle la section d'attache (114) de la deuxième plaque du support (110) forme avec cette deuxième plaque (112) un angle (□) supérieur à 60° ou un angle (□) supérieur à 80° ou un angle (□) égal à 90°, laquelle deuxième plaque (112) est agencée plus à distance de la première section de la broche d'attache (120) que la première plaque (111) du support (110).

13. Fixation selon l'une des revendications 1 à 12, dans laquelle la section d'attache (113) de la première plaque du support (110) est au moins deux fois aussi loin de l'ouverture (115, 116) dans la première plaque que la section d'attache (114) de la deuxième plaque (112) du support (110) de l'ouverture (115, 116) dans la deuxième plaque (112), laquelle première plaque (111) est agencée plus près de la première section (121) de la broche d'attache (120) que la deuxième plaque (112) du support (110).

14. Procédé d'attache d'une fixation pour un système d'échappement, présentant les étapes suivantes :

soudage d'une première section d'attache (113) d'une première plaque (111) d'un support (110) à un composant (200) du système d'échappement ou à un dessous de caisse d'un véhicule ;
soudage d'une deuxième section d'attache (114) d'une deuxième plaque (112) du support (110) au composant (200) du système d'échappement ou au dessous de caisse du véhicule de telle sorte que les deux première et deuxième plaques (111, 112) sont à distance l'une de l'autre, et que les deux première et deuxième plaques (111, 112) sont parallèles l'une à l'autre ou se trouvent dans des plans qui forment l'un avec l'autre un angle inférieur à 20° ;
agencement d'une deuxième section d'une broche d'attache (120), qui porte un premier disque métallique (131) dans des ouvertures (115, 116) qui sont ménagées dans les plaques du support (110) de telle sorte que le premier disque métallique (131) est agencé en dehors des deux plaques (111, 112) du support (110), dans lequel la broche d'attache (120) présente une première section (121), qui est réalisée pour traverser un caoutchouc de tuyau d'échappement, et dans lequel les ouvertures (115, 116) dans les plaques du support (110) présentent un diamètre qui est au moins 10 % plus grand qu'un diamètre de la broche d'attache (120) dans la zone dans laquelle elle pénètre dans l'ouverture (115, 116) respective ;
agencement d'un deuxième disque métallique (132) avec un passage central au niveau de la broche d'attache (120) de telle sorte que les deux plaques du support (110) sont agencées entre le premier et deuxième disque métallique (131, 132) dans lequel respectivement un des disques métalliques (131, 132) s'appuie contre une plaque (111, 112) afférente du support (110) ;

orientation de la première section de la broche d'attache (120) par rapport au composant (200) du système d'échappement ou au dessous de caisse du véhicule ; et

soudage des disques métalliques (131, 132) aux plaques (111, 112) afférentes et à la broche d'attache (120).

100

141

200

120

131

143

116

141

123

124

142

132

111

112

121

122

**Fig. 1A**

100

114

120

113

131

132

123

124

116

115

112

111

122

121

**Fig. 1B**

100

141

200

120

131

116

141

123

124

132

111

112

121

122

**Fig. 1C**

Fig. 1D

Fig. 2A

Fig. 2B

Fig. 3A

Fig. 3B

Fig. 3C

EP 3 128 145 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5673877 A